# EUROPEAN PATENT SPECIFICATION

(11) **EP 2 534 313 B1**
(45) Date of publication and mention of the grant of the patent: **13.11.2013**
(21) Application number: 10757061.6
(22) Date of filing: 15.09.2010
(51) Int. Cl.: E02D 27/42, F03D 1/00

(54) **FOUNDATION FOR FOR WIND TURBINES**
GRÜNDUNG FÜR WINDTURBINE
FONDATION D'UNE AÉOLIÈNNE

(30) Priority: 25.05.2010 EP 10163754
(43) Date of publication of application: 19.12.2012
(73) Proprietor: Siemens Aktiengesellschaft, 80333 München (DE)
(72) Inventor: STIESDAL, Henrik, DK-5000 Odense C (DK)
(86) International application number: PCT/EP2010/063546
(87) International publication number: WO 2011/147474

(56) References cited:
- EP-A2- 2 067 914
- US-A- 3 903 662
- US-A1- 2006 277 843
- US-A1- 2009 249 707

## Description

The invention relates to a jacket structure for offshore constructions, particularly a jacket structure for offshore wind turbines, comprising a number of profiles in axial or angled alignment and a number of node members.

Offshore constructions for structures to be installed in the sea are usually necessary in particular for offshore wind power plants, that is offshore wind turbines and represent a constructive challenge as the respective structure has to be erected on the seabed by means of an appropriate foundation.

A number of different types of foundations such as monopole-, tripile-, tripod- or gravity-foundations are known from prior art.

Aside, jacket structures are well-known since they are constructively simple, show good mechanical properties, particularly due to a high stiffness-to-material-use ratio, and thus, are adapted to be erected on sites with high waveloads. Besides, jacket structures are comparatively cost-effective.

EP 2 067 914 A1 discloses a jacket structure comprising a number of rod-profiles in axial or angled alignment and a number of node members, whereby a connection of the rod-profiles and the node members is achieved by welding.

Yet, welding represents a comparatively complex connecting method for establishing a stable connection of the node members with respective parts of the jacket structure, that is foremost the profiles of the jacket structure. Accordingly, the used materials must be weldable, which is deemed as a restriction in the selection of possible materials for the jacket structure. Altogether, welded joints are fairly complex in planning and realisation.

Hence, it is the object of the invention to provide a jacket structure for offshore constructions with an improved connecting principle concerning the node members.

This is achieved by a jacket structure for offshore constructions as described above, wherein the node members are connected to the jacket structure and/or at least one adapter profile connected to at least one first profile of the jacket structure by means of a bolted connection.

Hence, the present invention uses bolted joints instead of welded joints for providing a connection of the node members with respective first profiles of the jacket structure, that is respective axially extending rods and/or the at least one adapter profile connected to at least one first profile of the jacket structure. Bolted-connections are detachable and generally represent a constructively simple and quick way to provide a mechanically stable connection or installation of the jacket structure as a whole. As a result, the jacket structure may be easily and fast erected on a respective site. The bolted connections may be improved by the use of threads provided with the connected parts so that connecting means such as bolts or the like may be more stably engaged.

Additionally or alternatively, it is possible that the jacket structure comprises at least one adapter profile connected to at least one first profile of the jacket structure, whereby at least one node member is connected to the adapter profile. In such a manner, the adapter profile and the node member preferably built a pre-assembled component, comprising a bolted connection of the node member with the adapter profile. Hence, the adapter profile may be deemed as a separate part which serves to establish a connection between the node member and at least one first profile of the jacket structure.

Consequently, the adapter profile comprises at least two different connection portions, that is one for connecting with the node member by means of the inventive bolted joint and at least a second one for connecting with an adjacently axially disposed first profile of the jacket structure, whereby in the latter case not only bolted connections may be used, but different types of connections such as welded joints for instance are applicable as well.

In such a manner, the inventive jacket structure is easy to mantle, that is can be mantled "on site". Likewise, load calculations are reduced in complexity as well as costly inspections of welded joints are not necessary with the inventive jacket structure providing an easy, cost-effective connecting principle. Further, the inventive jacket structure allows a high degree of flexibility concerning diameters, wall thicknesses, angles, etc. of the respective profiles and/or node members.

The first and second profiles of the jacket structure are usually at least partially hollow or massive rods. The cross-section of the first and second profiles and the node members respectively is preferably round or elliptical, yet other shapes are feasible as well. All parts of the jacket structure are built of materials which are capable for the use in offshore-applications and particularly comprise good mechanical and anti-corrosive properties. An appropriate material may be stainless steel for instance. Anti-corrosive coatings or varnishes may be applied to the surface of the parts of the jacket structure.

Preferably, the node member comprises a base plate and at least one connecting member extending off the base plate for connecting with a second profile. Hence, the node member essentially comprises two different connecting portions, whereby the base plate is related to the axial first profiles or the adapter profile respectively and the connecting member is related to a respective angled second profile. The base plate and the connecting member are stably, preferably non-detachably connected with each other. Thus, the base plate and the connecting member may be integrally formed or represent separate stably joint components, whereby a firm connection may be attained by welding or the like for instance.

In a further embodiment of the invention the base plate comprises a connecting portion for connecting the node member with a first profile or the adapter profile. In such a manner, a defined connection of the node member and a first profile or an adapter profile of the jacket structure is attainable by means of the connecting portion which is allocated to the base plate of the node member.

Thereby, it is preferred that the connecting portion of the node member comprises a number of bores, whereby bolts penetrate through the bores thereby, connecting the node member to the first profile or the adapter profile. Thus, a bolted connection of the node member is achievable by bolts engaging through the bores or through holes disposed within the base plate and further into corresponding connecting portions provided with the first profiles or adapter profiles respectively. Threads may be applicable, that is bores and bolts may be provided with corresponding threads at their respective diameters which increases the strength of the bolted joint.

The bores are favourably circumferentially disposed at the borders of the base plate. This arrangement of the bores provides a good stability of the inventive bolted connection. However, the bores may additionally or alternatively be disposed at different sites of the base plate in exceptional cases. The concrete number and arrangement of the bores may differ and depends mainly on the constructive design and load of the inventive jacket structure.

It is possible, that at least one additional connecting member extends off the connecting member. Thereby, the number of potentially connectable second profiles to be connected with the node member may be increased by means of a branched structure of the connecting member. It is understood, that the joint between the connecting member and the respective at least one further connecting member branching thereof is mechanically stable, whereby preferably an integral design of the connecting member with the respective further connecting members is in favour. Thereby, welded joints or the like are applicable for instance.

Aside, the invention relates to a node arrangement for a jacket structure as described before comprising at least one node member being connected to an adapter profile by means of a bolted connection, whereby the adapter profile is connectable or connected to a first profile of the jacket structure. The node arrangement essentially represents a component that is ready to be connected with first profiles of the jacket structure by means of the adapter profile and further, second profiles of the jacket structure by means of the node member as will be described later on. The bolted connection between the node member and the adapter profile contributes to a fast and firm connection of the node member with the adapter profile.

The node member preferably comprises a base plate and at least one connecting member extending off the base plate. Thereby, the connecting member may provide a connection with a second profile that is a rod in an angled alignment with respect to the axial alignment of the first profiles. In other words, the base plate is related to axial extending profiles and the connecting member is related to angled extending profiles of the jacket structure.

It is preferred, when the base plate comprises a connecting portion. The connecting portion is adapted to provide a proper connection of the base plate with the adapter profile. In such a manner, the connecting portion may comprise a number of bores, whereby each bore is adapted to accommodate a bolt. Thus, the connection of the base plate of the node member and the adapter profile may be attained by bolts penetrating through the bores into appropriate connecting portions of the adapter profile. If need be, the bores and bolts may be provided with corresponding threads.

The bores are preferably circumferentially disposed at the boarders of the base plate. Of course, other arrangements of the bores are applicable as well.

Further, it is possible that at least one additional connecting member extends off the connecting member. In such a manner, the number of possibly attached second profiles may be increased with respect to a single node arrangement.

In the following the invention is described in detail as reference is made of the figures, whereby
- Fig. 1: shows a principle cut-out view of a jacket structure according to a first exemplary embodiment of the invention;
- Fig. 2: shows a principle cut-out view of a node arrangement according to a second exemplary embodiment of the invention;
- Fig. 3: shows a principle cut-out view of a node arrangement according to a third exemplary embodiment of the invention;
- Fig. 4: shows a principle cut-out view of a node arrangement according to a fourth exemplary embodiment of the invention; and
- Fig. 5: shows a principle cut-out view of a jacket structure according to a second exemplary embodiment of the invention.

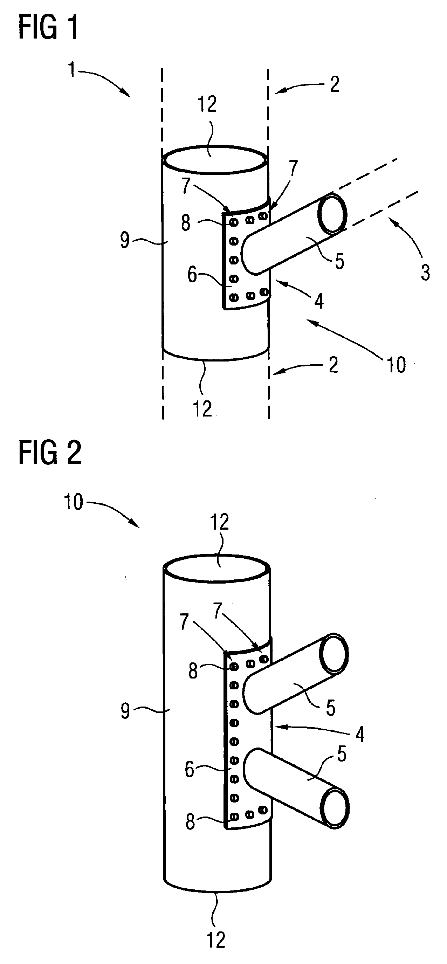

Fig. 1 shows a principle cut-out view of a jacket structure 1 according to a first exemplary embodiment of the invention, whereby only essential parts are depicted, that is fig. 1 contains only a representative part of the inventive jacket structure 1. The jacket structure 1 comprises first and second profiles 2, 3 (dotted) in the shape of axial extending steel rods (first profile 2) and in the shape of steel rods in an angled alignment (second profile 3) relative to a first profile 2. The jacket structure 1 further comprises a number of node members 4 in a regular arrangement, whereby fig. 1 shows only one representative example. The jacket structure 1 is preferably used for offshore wind turbines.

As is discernible from fig. 1, the node members 4 provide a connection site for the second profiles 3 by means of the connecting member 5 extending off the base plate 6 both representing the essential parts of the node member 4. The node member 4 comprises a respective connecting portion in the shape of circumferentially distributed bores 7 provided with the base plate 6. Bolts 8 engage through the bores 7 so as to engage in respective openings of an axially extending adapter profile 9. Hence, the node member 4, that is the base plate 6 and the adapter profile 9 may be deemed as a pre-assembled component in terms of a node arrangement 10 (cf. fig. 2 - 4).

By means of the inventive bolted connection a simple and fast way to detach or attach the node member 4 to the adapter profile 9 of the jacket structure 1 is achievable, which is particularly of advantage in terms of service and/or repair of the jacket structure 1 or respective parts of it.

Fig. 2 shows an inventive node arrangement 10 according to an exemplary embodiment of the invention. The essential difference of the node arrangement shown in fig. 2 to the node arrangement shown in fig. 1 is in that the node member 4 comprises two separate connecting members 5 pointing in different, that is essentially opposite directions. In such a manner, the node arrangement 10 or the node member 4 respectively may be connected with two second profiles 3 of the jacket structure 1.

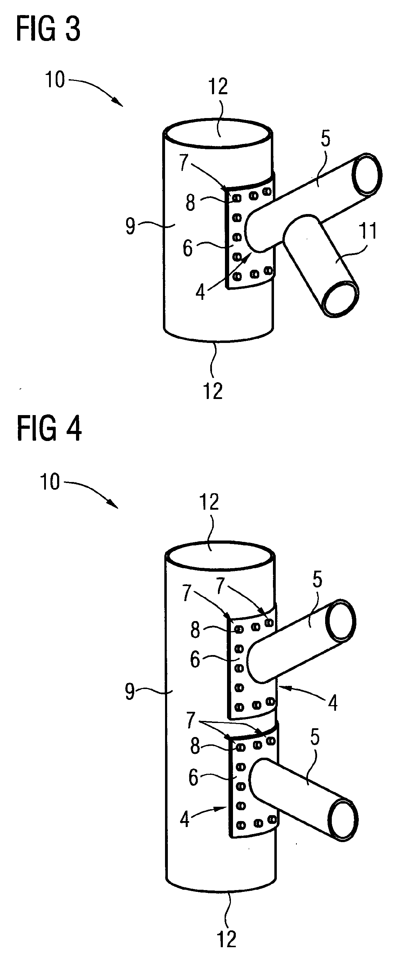

An alternative embodiment of an inventive node arrangement 10 according to a further exemplary embodiment of the invention is shown in fig. 3. In this case, the node arrangement 10 comprises a branched connecting member 5, that is an additional connecting member 11 extends off the connecting member 5. Hence, the connecting member 5 subdivides into further connecting members, that is with respect to the present embodiment the further connecting member 11. Of course, further connecting members 11 may extend off the connecting member 5. It is understood, that further connecting members may also extend of the connecting member 11. In such a manner, the number of possible arrangements of second profiles 3 to the node arrangement 10, that is the connecting members 5, 11 may be increased.

Fig. 4 shows a third embodiment of an inventive node arrangement 10, which is characterized in that the adapter profile 9 is connected with two separate node members 4 as they are depicted in fig. 1.

In such a manner, the node arrangement 10 may also be connected with two separate second profiles 3 of the inventive jacket structure 1, whereby in the embodiment according to fig. 4 each node member 4 may be separately connected with a respective second profile 3 (not shown) by means of the respective connecting members 5.

All node arrangements 10, that is the ones depicted in fig. 1 to 4 comprise axial connecting portions 12 disposed at the free axial endings of the adapter profile 9, so that the adapter profile 9 and the node arrangement 10 as a whole may be connected to adjacently disposed first profiles 2 of the jacket structure 1 (not shown) by means of welded or bolted joints for instance.

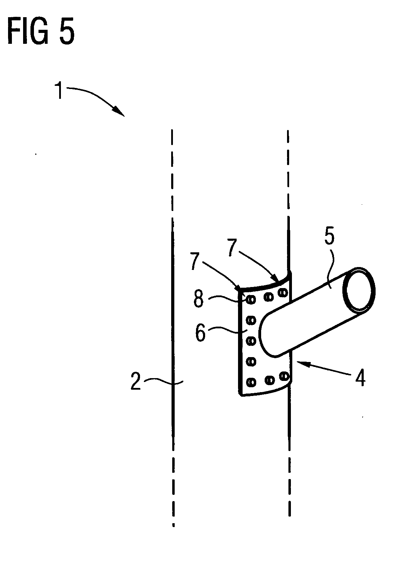

Fig. 5 shows a jacket structure 1 according to a second embodiment of the invention. In this case, the node member 4 is directly joint to a first profile 2 of the jacket structure 1 by means of a bolted connection, that is bolts 8 penetrate through the bores 7 of the base plate 6 of the node member 4 into corresponding openings within the first profile 2. Hence, the embodiment according to fig. 5 represents a basic principle of the present invention, whereby a bolted connection provides a detachable, yet mechanically stable connection of a node member 4 with the jacket structure 1, that is a first profile 2 of the jacket structure 1.

## Claims

1. Jacket structure (1) for offshore constructions, particularly jacket structure (1) for offshore wind turbines, comprising a number of first and second profiles (2, 3), whereby the first profiles (2) comprise rods in axial alignment and the second profiles (3) comprise rods in an angled alignment relative to the first profiles (2), and a number of node members (4) providing a connection site for the second profiles (3), wherein the node members (4) are connected to the first profiles (2) and/or at least one adapter profile (9) connected to at least one first profile (2) of the jacket structure (1) by means of a bolted connection.

2. Jacket structure according to claim 1, wherein the adapter profile (9) and the node member (4) build a pre-assembled component.

3. Jacket structure according to claim 1 or 2, wherein the node member (4) comprises a base plate (6) and at least one connecting member (5) for connecting with a second profile (3) extending off the base plate (6).

4. Jacket structure according to claim 3, wherein the base plate (6) comprises a connecting portion for connecting the node member (4) with a first profile (2) or the adapter profile (9).

5. Jacket structure according to claim 4, wherein the connecting portion of the node member (4) comprises a number of bores (7), whereby bolts (8) penetrate through the bores (7), thereby connecting the node member (4) to the first profile (2) or the adapter profile (9).

6. Jacket structure according to claim 5, wherein the bores (7) are circumferentially disposed at the boarders of the base plate (6).

7. Jacket structure according to one of the claims 3 to 6, wherein at least one additional connecting member (11) extends off the connecting member (5).

8. Node arrangement (10) for a jacket structure (1) according to one of the preceding claims comprising at least one node member (4) being connected to an adapter profile (9) by means of a bolted connection, whereby the adapter profile (9) is connectable or connected to a first profile (2) of the jacket structure (1).

9. Node arrangement (10) according to claim 8, wherein the node member (4) comprises a base plate (6) and at least one connecting member (5) extending off the base plate (6).

10. Node arrangement (10) according to claim 9, wherein the base plate (6) comprises a connecting portion.

11. Node arrangement (10) according to claim 10, wherein the connecting portion comprises a number of bores (7), whereby each bore (7) is adapted to accommodate a bolt (8).

12. Node arrangement (10) according to claim 11, wherein the bores (7) are circumferentially disposed at the boarders of the base plate (6).

13. Node arrangement (10) according to one of the claims 8 - 12, wherein at least one additional connecting member (11) extends off the connecting member (5).

## Patentansprüche

1. Jacketstruktur (1) für Offshore-Konstruktionen, insbesondere Jacketstruktur (1) für Offshore-Windturbinen, welche eine Anzahl von ersten und zweiten Profilen (2, 3), wobei die ersten Profile (2) Stangen in axialer Ausrichtung umfassen und die zweiten Profile (3) Stangen in abgewinkelter Ausrichtung relativ zu den ersten Profilen (2) umfassen, und eine Anzahl von Knotenelementen (4), die eine Verbindungsstelle für die zweiten Profile (3) bereitstellen, umfasst, wobei die Knotenelemente (4) mit den ersten Profilen (2) und/oder mindestens einem Adapterprofil (9), das mit mindestens einem ersten Profil (2) der Jacketstruktur (1) verbunden ist, mittels einer Bolzenverbindung verbunden sind.

2. Jacketstruktur nach Anspruch 1, wobei das Adapterprofil (9) und das Knotenelement (4) eine vormontierte Komponente bilden.

3. Jacketstruktur nach Anspruch 1 oder 2, wobei das Knotenelement (4) eine Grundplatte (6) und mindestens ein Verbindungselement (5) zum Verbinden mit einem zweiten Profil (3), das sich von der Grundplatte (6) weg erstreckt, umfasst.

4. Jacketstruktur nach Anspruch 3, wobei die Grundplatte (6) einen Verbindungsabschnitt zum Verbinden des Knotenelements (4) mit einem ersten Profil (2) oder dem Adapterprofil (9) umfasst.

5. Jacketstruktur nach Anspruch 4, wobei der Verbindungsabschnitt des Knotenelements (4) eine Anzahl von Bohrungen (7) umfasst, wobei Bolzen (8) durch die Bohrungen (7) hindurchführen und dadurch das Knotenelement (4) mit dem ersten Profil (2) oder dem Adapterprofil (9) verbinden.

6. Jacketstruktur nach Anspruch 5, wobei die Bohrungen (7) in Umfangsrichtung an den Rändern der Grundplatte (6) angeordnet sind.

7. Jacketstruktur nach einem der Ansprüche 3 bis 6, wobei sich mindestens ein zusätzliches Verbindungselement (11) von dem Verbindungselement (5) weg erstreckt.

8. Knotenanordnung (10) für eine Jacketstruktur (1) nach einem der vorhergehenden Ansprüche, welche mindestens ein Knotenelement (4) umfasst, das mittels einer Schraubverbindung mit einem Adapterprofil (9) verbunden ist, wobei das Adapterprofil (9) mit einem ersten Profil (2) der Jacketstruktur (1) verbindbar oder verbunden ist.

9. Knotenanordnung (10) nach Anspruch 8, wobei das Knotenelement (4) eine Grundplatte (6) und mindestens ein Verbindungselement (5), das sich von der Grundplatte (6) weg erstreckt, umfasst.

10. Knotenanordnung (10) nach Anspruch 9, wobei die Grundplatte (6) einen Verbindungsabschnitt umfasst.

11. Knotenanordnung (10) nach Anspruch 10, wobei der Verbindungsabschnitt eine Anzahl von Bohrungen (7) umfasst, wobei jede Bohrung (7) dazu eingerichtet ist, einen Bolzen (8) aufzunehmen.

12. Knotenanordnung (10) nach Anspruch 11, wobei die Bohrungen (7) in Umfangsrichtung an den Rändern der Grundplatte (6) angeordnet sind.

13. Knotenanordnung (10) nach einem der Ansprüche 8 bis 12, wobei sich mindestens ein zusätzliches Verbindungselement (11) von dem Verbindungselement (5) weg erstreckt.

## Revendications

1. Structure d'enveloppe (1) pour constructions en mer, particulièrement structure d'enveloppe (1) pour éoliennes en mer, comprenant un certain nombre de premiers et deuxièmes profilés (2, 3), dans laquelle les premiers profilés (2) comprennent des tiges en alignement axial et les deuxièmes profilés (3) comprennent des tiges en un alignement anglé par rapport aux premiers profilés (2), et un certain nombre d'éléments de noeud (4) créant un site de connexion pour les deuxièmes profilés (3), dans laquelle les éléments de noeud (4) sont connectés aux premiers profilés (2) et/ou au moins un profilé adaptateur (9) connecté à au moins un premier profilé (2) de la structure d'enveloppe (1) au moyen d'une connexion boulonnée.

2. Structure d'enveloppe selon la revendication 1, dans laquelle le profilé adaptateur (9) et l'élément de noeud (4) constituent un composant pré-assemblé.

3. Structure d'enveloppe selon la revendication 1 ou 2, dans laquelle l'élément de noeud (4) comprend une plaque de base (6) et au moins un élément de connexion (5) pour une connexion avec un deuxième profilé (3) s'étendant à partir de la plaque de base (6).

4. Structure d'enveloppe selon la revendication 3, dans laquelle la plaque de base (6) comprend une partie de connexion pour connecter l'élément de noeud (4) avec un premier profilé (2) ou le profilé adaptateur (9).

5. Structure d'enveloppe selon la revendication 4, dans laquelle la partie de connexion de l'élément de noeud (4) comprend un certain nombre d'alésages (7), dans laquelle des boulons (8) pénètrent à travers les alésages (7), connectant ainsi l'élément de noeud (4) au premier profilé (2) ou au profilé adaptateur (9).

6. Structure d'enveloppe selon la revendication 5, dans laquelle les alésages (7) sont circonférentiellement disposés sur les bords de la plaque de base (6).

7. Structure d'enveloppe selon l'une des revendications 3 à 6, dans laquelle au moins un élément de connexion additionnel (11) s'étend à partir de l'élément de connexion (5).

8. Agencement (10) de noeuds pour une structure d'enveloppe (1) selon l'une des revendications précédentes comprenant au moins un élément de noeud (4) étant connecté à un profilé adaptateur (9) au moyen d'une connexion boulonnée, dans lequel le profilé adaptateur (9) est connectable ou connecté à un premier profilé (2) de la structure d'enveloppe (1).

9. Agencement (10) de noeuds selon la revendication 8, dans lequel l'élément de noeud (4) comprend une plaque de base (6) et au moins un élément de connexion (5) s'étendant à partir de la plaque de base (6).

10. Agencement (10) de noeuds selon la revendication 9, dans lequel la plaque de base (6) comprend une partie de connexion.

11. Agencement (10) de noeuds selon la revendication 10, dans lequel la partie de connexion comprend un certain nombre d'alésages (7), dans lequel chaque alésage (7) est adapté à recevoir un boulon (8).

12. Agencement (10) de noeuds selon la revendication 11, dans lequel les alésages (7) sont circonférentiellement disposés sur les bords de la plaque de base (6).

13. Agencement (10) de noeuds selon l'une des revendications 8 à 12, dans lequel au moins un élément de connexion additionnel (11) s'étend à partir de l'élément de connexion (5).
